# FASCICULE DE BREVET EUROPEEN

(11) **EP 0 728 113 B1**
(45) Date de publication et mention de la délivrance du brevet: **21.01.1998**
(21) Numéro de dépôt: 95901478.8
(22) Date de dépôt: 10.11.1994
(51) Int. Cl.: B65D 88/70

(54) **DISPOSITIF DE DISTRIBUTION POUR L'ALIMENTATION D'UNE CAPACITE AVEC UN FLUIDE GAZEUX**
VERTEILUNGSVORRICHTUNG ZUR VERSORGUNG EINES BEHÄLTERS MIT EINEM GASFÖRMIGEN FLUID
DISPENSING DEVICE FOR SUPPLYING A GASEOUS FLUID TO A SPACE

(30) Priorité: 15.11.1993 FR 9313809
(43) Date de publication de la demande: 28.08.1996
(73) Titulaire: SOCIETE FINANCIERE DE GESTION, 59100 Roubaix (FR)
(72) Inventeur: SIMOENS, Hervé, F-59100 Roubaix (FR)
(74) Mandataire: Ecrepont, Robert
(86) Numéro de dépôt international: FR9401318
(87) Numéro de publication internationale: WO9513973

(56) Documents cités:
- DE-A- 2 737 842
- FR-A- 2 660 395
- US-A- 4 201 362

## Description

L'invention se rapporte à un dispositif de distribution assurant séquentiellement, d'une part, l'alimentation d'une capacité avec un fluide gazeux par ailleurs comprimé et, d'autre part, la décharge brusque de cette capacité, notamment vers une installation exploitant le fluide comprimé.

L'invention s'applique plus particulièrement, mais non limitativement, à l'amélioration de l'écoulement de produits granuleux ou pulvérulents en sortie d'installations telles des silos ou des trémies.

Par dispositif de distribution du type précité, on comprendra un dispositif qui, lorsque son alimentation en fluide sous pression est interrompue par un moyen à cet effet et, notamment lorsque la pression d'alimentation est ramenée à la pression atmosphérique, assure la décharge brusque de la capacité à laquelle il est fonctionnellement associé.

De manière connue (FR-A-2.660.395), un tel dispositif comprend un corps présentant :
- une chambre d'alimentation de volume variable pourvue, d'une part, d'un orifice d'alimentation avec du fluide gazeux par ailleurs comprimé à ladite pression d'alimentation et, d'autre part, d'un passage de ce fluide gazeux vers la capacité et,
- de volume également variable, une chambre de décharge vers l'installation que le dispositif équipe, laquelle chambre est à cet effet, d'une part, pourvue d'une découpe qui, délimitant une voie de passage pour le fluide accumulé dans la capacité, est bordée par un siège d'étanchéité destiné à coopérer de manière étanche avec la portée d'un organe obturateur de masse déterminée et, d'autre part, au moins raccordée à l'installation par une conduite, dite d'évacuation, qui prend naissance au niveau dudit siège.

De manière connue, le passage du fluide vers la capacité, d'une part, est très étroit de manière à limiter le risque d'introduction de particules de matériau pulvérulent et, d'autre part, d'étendue telle que la section totale de passage convienne pour l'alimentation suffisamment rapide de la capacité en fluide sous pression.

L'organe obturateur, d'une part, est mobile entre deux positions opposées, dont une dans laquelle il coopère par sa portée avec le siège de la conduite d'évacuation et une autre dans laquelle il est largement écarté du siège de ladite conduite et, d'autre part, comprend :
- une face qui, dite première, est exposée à l'action du fluide à la pression à laquelle il se trouve directement dans la chambre d'alimentation,
- une face qui, dite seconde, est opposée à la face première et est exposée à l'action du fluide à la pression à laquelle il se trouve directement dans la capacité,
- une face qui, dite troisième, est également opposée à la face première et est exposée à l'action du fluide à la pression à laquelle il se trouve dans la conduite d'évacuation.

Afin que la décharge soit brusque, il faut non seulement que l'alimentation soit interrompue mais encore que la chambre d'alimentation soit brusquement vidée.

A défaut, l'air qu'elle contient et qui ne pourrait s'évacuer que par le passage étroit précité freinerait le recul du piston.

Pour cette vidange brusque de la chambre d'alimentation, dans les réalisations connues, c'est par le moyen de commande qu'elle est reliée à l'atmosphère.

On reproche aux dispositifs connus d'être bruyants.

En effet, la vidange brusque de la chambre d'alimentation vers l'atmosphère provoque une détonation particulièrement puissante.

Un des résultats que l'invention vise à obtenir est précisément un dispositif du type précité qui, par rapport aux dispositifs connus, a un niveau d'émission sonore particulièrement atténué.

On reproche également aux dispositifs connus d'avoir une vitesse de décharge insuffisamment élevée.

Un autre des résultats que l'invention vise à obtenir est un dispositif du type précité qui, par rapport aux dispositifs connus, a une vitesse notablement accrue de passage d'un état dit d'alimentation de la capacité à un état dit de vidange de ladite capacité.

A cet effet, l'invention a pour objet un dispositif de distribution du type précité selon la revendication 1.

Cette invention sera bien comprise à l'aide de la description ci-après faite à titre d'exemple non limitatif, en regard du dessin ci-annexé qui représente schématiquement :

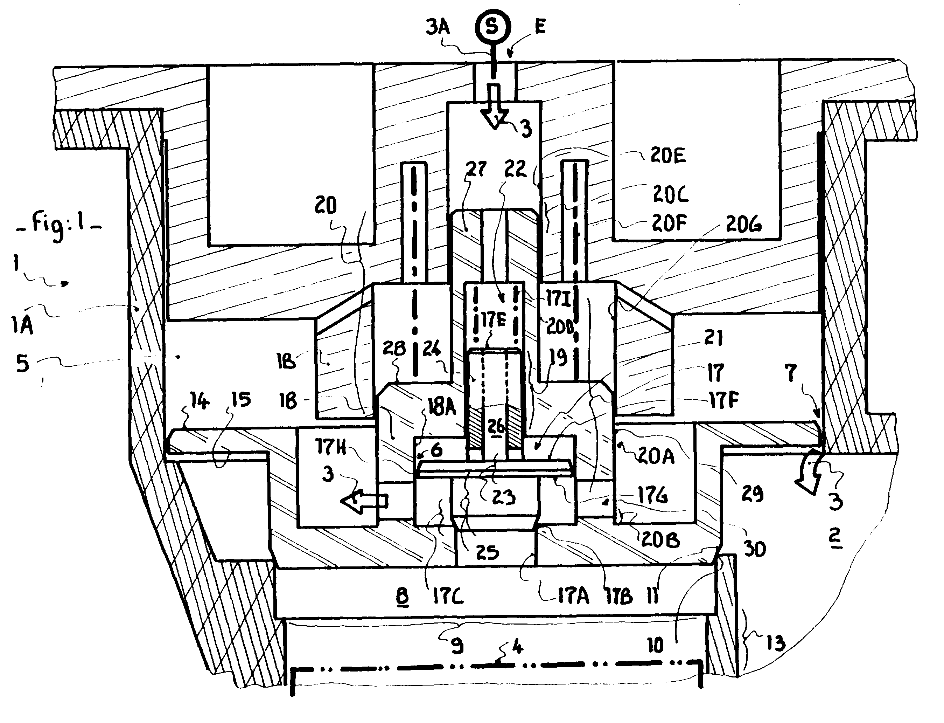

- figure 1 : un dispositif selon l'invention, vu en coupe selon un axe longitudinal,
- figures 2 et 3 : deux demi-vues du dispositif de la figure 1 dans deux phases successives de fonctionnement,

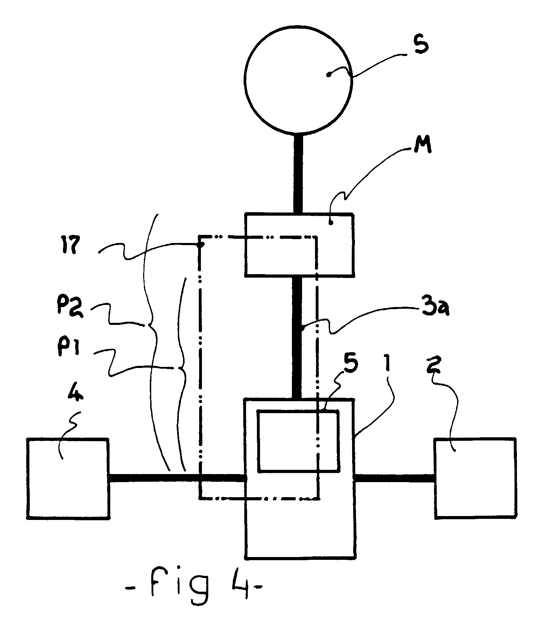

- figure 4 : un schéma de montage du dispositif.

En se reportant au dessin, on voit un dispositif 1 de distribution monostable assurant séquentiellement, d'une part, l'alimentation d'une capacité 2 (partiellement représentée) avec un fluide gazeux 3 par ailleurs comprimé, notamment au niveau d'une source S, à une pression dite d'alimentation et, d'autre part, la décharge brusque de cette capacité 2, notamment vers une installation 4 (partiellement représentée) exploitant le fluide comprimé 3.

Notamment, le fluide 3 sous pression est acheminé à une entrée E d'alimentation du dispositif par une conduite 3A.

Par dispositif 1 de distribution du type précité, on comprendra un dispositif qui, lorsque l'alimentation en fluide sous pression est, par un moyen M, interrompue à son entrée E et, notamment lorsque la pression d'alimentation est ramenée sensiblement à la pression atmosphérique, assure la décharge brusque de la capacité 2 à laquelle il est fonctionnellement associé.

Le fluide comprimé à été représenté par différentes flèches repérées 3.

Le dispositif 1 comprend un corps 1A présentant :
- une chambre d'alimentation 5 de volume variable pourvue, d'une part, d'un orifice 6 d'alimentation avec du fluide gazeux 3, par ailleurs comprimé à ladite pression d'alimentation et, d'autre part, d'un passage 7 de ce fluide gazeux 3 vers la capacité 2 et,
- de volume également variable, une chambre 8 de décharge vers l'installation 4 que le dispositif 1 équipe, laquelle chambre 8 est, à cet effet, d'une part, équipée d'une découpe 9 qui, délimitant une voie de passage pour le fluide 3 accumulé dans la capacité 2, est bordée par un siège d'étanchéité 10 destiné à coopérer de manière étanche avec la portée 11 d'un organe obturateur 12 de masse déterminée et, d'autre part, au moins raccordée à l'installation 4 par une conduite 13, dite d'évacuation, qui prend naissance au niveau du dit siège 10.

De manière connue, le passage 7 du fluide vers la capacité 2, d'une part, est très étroit de manière à limiter le risque d'introduction de particules de matériau pulvérulent et, d'autre part, d'étendue telle que la section totale de passage convienne pour l'alimentation suffisamment rapide de la capacité en fluide sous pression.

L'organe 12 obturateur, d'une part, est mobile entre deux positions opposées, dont une dans laquelle il coopère par sa portée 11 avec le siège 10 de la conduite 13 d'évacuation et une autre dans laquelle il est largement écarté du siège de la dite conduite et, d'autre part, comprend :
- une face 14 qui, dite première, est exposée à l'action du fluide 3 à la pression à laquelle il se trouve directement dans la chambre 5 d'alimentation,
- une face 15 qui, dite seconde, est opposée à la face 14 première et est exposée à l'action du fluide 3 à la pression à laquelle il se trouve directement dans la capacité 2,
- une face 16 qui, dite troisième, est également opposée à la face première 14 et est exposée à l'action du fluide 3 à la pression à laquelle il se trouve dans la conduite 13 d'évacuation.

Classiquement, l'étendue de la face première 14 de l'organe obturateur 12 est sensiblement égale à la somme des étendues de ses faces 15, 16 dites seconde et troisième.

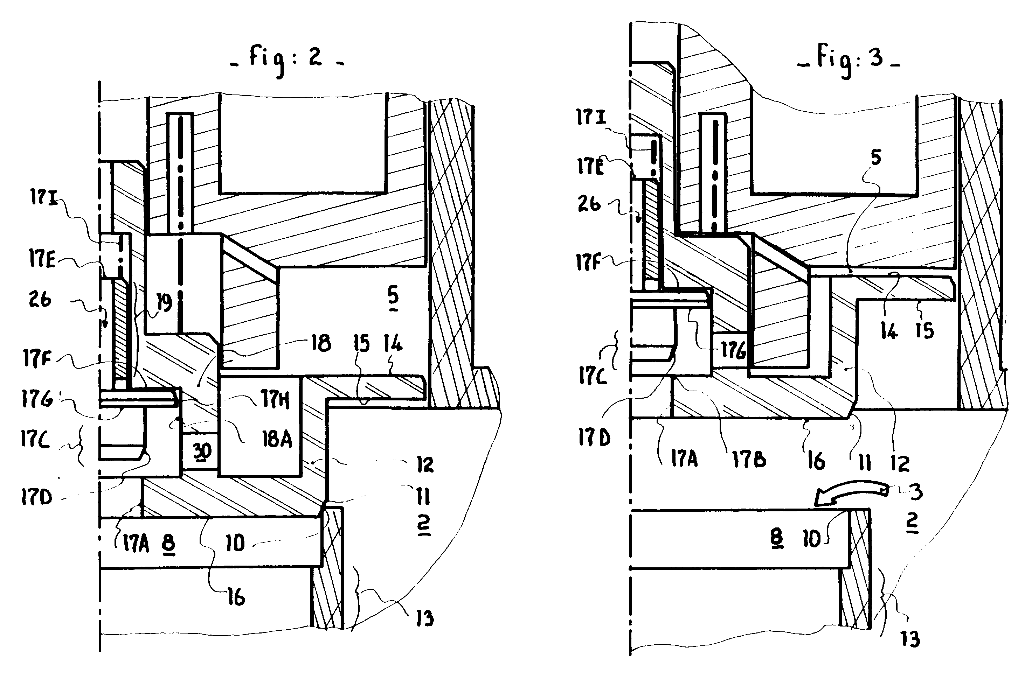

Par cela, lorsque l'alimentation en fluide sous pression 3 est, par un moyen M, interrompue à l'entrée E du dispositif 1 et, notamment lorsque la pression d'alimentation est ramenée sensiblement à la pression atmosphérique, la face première 14 étant libérée de l'action du fluide 3 à sa pression d'alimentation :
- le fluide 3 contenu dans la capacité 2 agissant sur sa face seconde 15 repousse l'organe 12 obturateur ce qui assure la décharge (figure 3) brusque de la capacité 2 à travers la conduite 13 de décharge reliée à l'installation 4.

La pression de fluide qui résidait jusqu'alors contre la face troisième 16 était celle régnant dans l'installation 4, telle la trémie, c'est à dire sensiblement une pression équivalente à celle atmosphérique et donc à la pression qui règne dans la chambre d'alimentation lorsque le fluide contenu dans ladite chambre a effectivement pu s'en échapper.

De manière remarquable, en vue d'abaisser la pression dans la chambre d'alimentation en fluide sous pression et donc d'obtenir la brusque ouverture de l'organe obturateur 12, sensiblement à l'issue de l'interruption de l'alimentation en fluide 3 sous pression du dispositif 1 de distribution, au lieu de vidanger à l'atmosphère le fluide sous pression 3 contenu dans la chambre d'alimentation 5 et une partie P1 de circuit d'alimentation comprise entre cette chambre 5 et le moyen M d'interruption, c'est dans la conduite 13 dite d'évacuation qu'on libère le fluide 3 sous pression qui, contenu au moins dans la chambre d'alimentation 5 maintenait jusqu'alors l'obturateur 12 en appui sur son siège d'étanchéité 10.

Par cela, la brusque détente du fluide sous pression contenu dans la chambre d'alimentation 5 n'engendre plus directement de nuisance sonore.

De manière également remarquable, outre le fluide sous pression 3 contenu dans la chambre d'alimentation 5, c'est également dans la conduite d'évacuation 13, qu'on libère le fluide sous pression 3 contenu dans une partie P2 du circuit d'alimentation qui comprend le moyen M d'interruption de la dite alimentation et la partie de la conduite d'alimentation 3A interposée entre ce moyen M et la dite chambre d'alimentation 5.

Le respect de ces particularités atténue encore l'émission sonore du dispositif de distribution de l'invention.

Le dispositif comprend un moyen commandé 17 de libération dans la conduite 13 dite d'évacuation du fluide 3 sous pression contenu au moins dans la chambre d'alimentation 5 pour maintenir l'obturateur 12 en appui sur son siège d'étanchéité 10.

Il s'agit d'un moyen commandé 17 de libération qui, outre l'évacuation du fluide sous pression 3 contenu dans la chambre d'alimentation 5, libère également dans la conduite d'évacuation 13, le fluide sous pression 3 contenu dans une partie P2 du circuit d'alimentation comprenant le moyen M d'interruption de la dite alimentation et la conduite d'alimentation 3A interposée entre ce moyen M et la dite chambre d'alimentation 5.

Il s'agit d'un moyen 17 de libération qui, sensible à la pression d'alimentation du fluide 3 sous pression, à pour fonction, lorsque la valeur de la pression d'alimentation en fluide sous pression 3 est inférieure à une valeur prédéterminée, d'induire la brusque application sur la face première 14 de l'organe 12 obturateur, de l'action du fluide gazeux 3 à la pression à laquelle il se trouve dans la conduite d'évacuation 13, c'est à dire à la pression avec laquelle il agit sur la face troisième 16 de l'organe 12 obturateur.

Le fluide sous pression contenu dans la chambre d'alimentation n'a plus à être évacué vers le moyen M d'interruption via la conduite d'alimentation 3A de cette chambre.

En effet, de manière originale, le moyen M d'interruption brusque de l'alimentation n'a plus à consister obligatoirement en un distributeur permettant :
- d'une part, l'interruption du flux de fluide sous pression issu de la source S et,
- d'autre part, la vidange à l'atmosphère de la chambre d'alimentation et de la fraction de conduite d'alimentation qui la relie au distributeur.

Par cela la vitesse de réaction du dispositif est accrue de manière très sensible puisque l'équilibre des pressions s'exerçant sur les faces première et troisième de l'obturateur 12 peut s'effectuer instantanément.

La valeur prédéterminée de pression de fonctionnement du moyen 17 de libération est une valeur inférieure à la valeur de la pression nominale d'alimentation du dispositif 1 en fluide sous pression 3.

Par exemple, la valeur prédéterminée de fonctionnement est voisine de celle de la pression atmosphérique, mais l'homme du métier est à même de choisir cette valeur en fonction de paramètres de fonctionnement de l'installation 4.

Par cela, le moyen 17 de libération entre en fonctionnement lorsque l'alimentation du dispositif 1 en fluide 3 sous pression est interrompue et notamment lorsque son entrée E d'alimentation est mise à la pression atmosphérique par un organe à cet effet (non représenté).

De manière remarquable, le moyen 17 commandé de libération brusque comprend :
- une découpe 17A qui, réalisée dans l'organe obturateur 12, d'une part, détermine un canal 17A débouchant dans les faces 14, 16 dites première 14 et troisième 16 dudit organe obturateur 12 et, d'autre part, constitue également un siège 17B en vue de l'obturation du canal 17A sur toute sa section de passage,
- un élément 17C d'obturation du canal 17A qui,
   . présente une portée d'étanchéité 17D destinée à coopérer avec le siège 17B de ce canal 17A,
   . est de faible masse par rapport à celle de l'organe obturateur 12,
   . est mobile entre deux positions opposées dont l'une dans laquelle il présente sa portée 17D contre le siège 17B du canal 17A et l'autre dans laquelle ladite portée 17D est écartée dudit siège 17B,
   . présente au moins deux surfaces 17E, 17F, 17G opposées, toutes deux soumises à l'action du fluide gazeux 3 mais, d'une part, l'une 17E, 17F directement à la pression à laquelle le fluide 3 est introduit dans le corps 2 et, d'autre part, l'autre 17G à la pression qu'il prend en se trouvant dans la chambre 5 dite d'alimentation,
   . présente une surface 17H qui, tournée vers une surface 18A, dite antagoniste, solidaire d'une paroi 18 distincte de l'élément 17C d'obturation réalise avec cette surface antagoniste un passage 6 qui, d'une part, est suffisamment étroit pour limiter le risque d'introduction de particules de matériau pulvérulent et, d'autre part, d'étendue telle que la section totale de passage convienne pour l'alimentation suffisamment rapide de la chambre 5 d'alimentation et conséquemment de la capacité 2, en fluide sous pression.

Dans cette forme de réalisation, le dispositif 1 est particulièrement efficace.

De manière notable, le moyen 17 commandé de libération comprend un organe 17I d'application élastique de l'élément 17C d'obturation par sa portée 17D contre le siège d'étanchéité 17B.

La valeur prédéterminée de pression de fonctionnement du moyen 17 de libération est ainsi essentiellement déterminée par la raideur de l'organe élastique 17I qui contraint l'élément 17C d'obturation vers le siège d'étanchéité 17B.

De manière également notable, l'élément 17C d'obturation est mobile en translation entre ses deux positions opposées et coopère au moins indirectement avec le corps 1A du dispositif 1 au moins par le biais d'un moyen 19 de guidage en translation étanche au fluide gazeux 3.

Cette dernière particularité optimise le fonctionnement du dispositif.

De manière connue, l'organe obturateur 12 est sensiblement de révolution et il est guidé en translation entre ses deux positions opposées par un moyen 20 à cet effet qui, situé approximativement sur l'axe longitudinal dudit organe 12, est étanche au fluide gazeux 3.

De manière également connue, le moyen 20 de guidage comprend une pièce 20A de révolution qui présente deux extrémités 20B, 20C opposées, dont une 20B est associée à l'organe obturateur 12 et l'autre 20C présente une portée 20D cylindrique qui coopère avec un alésage 20E de guidage en translation quant à lui, d'une part, réservé dans une paroi 1B au moins indirectement liée au corps 1A du dispositif 1 et, d'autre part, au moins indirectement relié à la source S de fluide 3 sous pression.

Toujours de manière connue, l'organe obturateur 12 est, par un organe 20F à cet effet, élastiquement sollicité dans le sens d'application de sa portée 11 contre le siège 19 de la conduite 13 d'évacuation.

De manière remarquable :
- la découpe 17A qui constitue le canal 17A est réalisée approximativement au centre de l'organe obturateur 12,
- la pièce 20A de révolution que comprend le moyen 20 de guidage en translation de l'organe obturateur 12 présente, sensiblement coaxialement à la découpe 17A, une cavité 21 approximativement cylindrique de révolution qui, à l'une de ses extrémités, s'ouvre dans la chambre 5 d'alimentation et, à l'autre extrémité, présente coaxialement un conduit 22, également cylindrique de révolution, lequel conduit 22 débouche dans l'alésage 20E dudit moyen de guidage en translation qui est relié à la source S de fluide sous pression,
- l'élément 17C d'obturation du canal 17A consiste en un corps épaulé et cylindrique de révolution qui comprend,
   . un arbre médian 23 qui, dit piston, est engagé dans la cavité 21 de la pièce de révolution 20A du moyen 20 de guidage en translation de l'organe 12 obturateur, et ce, de manière à présenter, d'une part, une face cylindrique 17H en vis à vis de la surface 18A de la cavité 21 afin de constituer un passage 6 ayant les caractéristiques du passage 6 d'alimentation de la chambre 5 d'alimentation du dispositif et, d'autre part, deux surfaces extrêmes opposées 17F, 17G dont l'une 17F est tournée vers l'intérieur de la cavité 21 et de ce fait directement exposée au fluide 3 à sa pression d'alimentation et, l'autre 17G également exposée au fluide 3, mais à la pression que ce dernier prend dans la chambre 5 dite d'alimentation,
   . deux arbres cylindriques extrêmes opposés 24, 25, dont, d'une part, l'un 24 qui, porté par la surface 17G recevant l'action du fluide 3 à la pression qu'il prend dans la chambre 5 d'alimentation, présente la portée d'étanchéité 17D destinée à coopérer avec le siège 17B du canal 17A et, d'autre part, l'autre 25 qui, porté par la surface 17F tournée vers l'intérieur de la cavité 21, s'engage à coulissement dans le conduit 22 indirectement relié à la source S de fluide sous pression et, comprend un perçage 26 sensiblement axial et ouvert non seulement dans la face libre 17E de cet arbre, mais également au niveau de son plan de raccordement avec la face 17F qui le porte.

De manière notable, le conduit 22 indirectement relié à la source S de fluide sous pression est épaulé et, abrite un organe 17H élastique qui, s'appuyant sur ledit épaulement et par ailleurs sur la face libre 17E de l'arbre 24 engagé dans ce conduit 22, assure l'application élastique de l'élément 17C par sa portée 17D contre le siège d'étanchéité 17B du canal 17A ouvert dans l'organe 12 obturateur.

De manière notable la pièce 20A de révolution que comprend le moyen 20 de guidage en translation de l'organe obturateur 12 est une pièce épaulée qui présente :
- un arbre 27 dont la surface latérale 20D est cylindrique de révolution et constitue la portée 20D destinée à coopérer avec la portée 20E de guidage en translation réservée dans la paroi 1B au moins indirectement reliée au corps 1A du dispositif 1 et,
- une surface épaulée 28 à laquelle ledit arbre 27 se raccorde,
- une surface 29 cylindrique de révolution qui, coaxiale à l'arbre 27, coopère avec une portée 20G qui, au moins indirectement reliée au corps 1A du dispositif 1, comprend au moins un orifice 30 autorisant le passage du fluide contenu dans la chambre 5 d'alimentation vers la surface épaulée 28 en vue de son application à ladite surface, à la pression à laquelle il se trouve dans la chambre 5.

Le respect de ces dernières particularités permet la construction d'un dispositif qui est particulièrement robuste et fiable.

## Revendications

1. Dispositif (1) de distribution assurant séquentiellement, d'une part, l'alimentation d'une capacité (2) avec un fluide gazeux (3), par ailleurs comprimé au niveau d'une source (S), à une pression dite d'alimentation et, d'autre part, suite à l'interruption de l'alimentation par un moyen (M), la décharge brusque de cette capacité (2), notamment vers une installation (4) exploitant le fluide comprimé (3),
ledit fluide (3) sous pression étant acheminé à une entrée E d'alimentation du dispositif (1) par une conduite (3A) sur laquelle se trouve interposé le moyen (M) d'interruption,
le dispositif (1) comprenant un corps (lA) qui présente :
- une chambre d'alimentation (5) de volume variable pourvue, d'une part, d'un orifice (6) d'alimentation avec du fluide gazeux (3) par ailleurs comprimé à ladite pression d'alimentation et, d'autre part, d'un passage (7) de ce fluide gazeux (3) vers la capacité (2) et,
- de volume également variable, une chambre (8) de décharge vers l'installation (4) que le dispositif (1) équipe, laquelle chambre (8) est à cet effet, d'une part, équipée d'une découpe (9) qui, délimitant une voie de passage pour le fluide (3) accumulé dans la capacité (2), est bordée par un siège d'étanchéité (10) destiné à coopérer de manière étanche avec la portée (11) d'un organe obturateur (12) de masse déterminée et, d'autre part, au moins raccordée à l'installation (4) par une conduite (13), dite d'évacuation, qui prend naissance au niveau du dit siège (10),
l'organe (12) obturateur, d'une part, étant mobile entre deux positions opposées, dont une dans laquelle il coopère par sa portée (11) avec le siège (10) de la conduite (13) d'évacuation et une autre dans laquelle il est largement écarté du siège de la dite conduite et, d'autre part, comprenant :
- une face (14) qui, dite première, est exposée à l'action du fluide (3) à la pression à laquelle il se trouve directement dans la chambre (5) d'alimentation,
- une face (15) qui, dite seconde, est opposée à la face (14) première et est exposée à l'action du fluide (3) à la pression à laquelle il se trouve directement dans la capacité (2),
- une face (16) qui, dite troisième, est également opposée à la face première (14) et est exposée à l'action du fluide (3) à la pression à laquelle il se trouve dans la conduite (13) d'évacuation,
cet organe obturateur (12) étant sensiblement de révolution et guidé en translation entre ses deux positions opposées, par un moyen (20) à cet effet qui, situé approximativement sur l'axe longitudinal dudit organe (12), est étanche au fluide gazeux (3), ledit moyen (20) de guidage comprenant une pièce (20A) de révolution qui, présente deux extrémités (20B, 20C) opposées dont une (20B) est associée à l'organe obturateur (12) et l'autre (20C) présente une portée (20D), cylindrique qui coopère avec un alésage (20E) de guidage en translation quant à lui, d'une part, réservé dans une paroi (1B) au moins indirectement liée au corps (lA) du dispositif (1) et, d'autre part, au moins indirectement relié à la source (S) de fluide (3) sous pression,
ce dispositif étant **CARACTERISE** en ce que :
- il comprend au moins un moyen commandé (17) de libération dans la conduite (13) dite d'évacuation du fluide (3) sous pression contenu au moins dans la chambre d'alimentation (5) pour maintenir l'obturateur (12) en appui sur son siège d'étanchéité (10), ce moyen (17) de libération comprenant :
. une découpe (17A) qui, réalisée dans l'organe obturateur (12), d'une part, détermine un canal (17A) débouchant dans les faces (14,16) dites première (14) et troisième (16) dudit organe obturateur (12) et, d'autre part, constitue également un siège (17B) en vue de l'obturation du canal (17A) sur toute sa section de passage,
. un élément (17C) d'obturation du canal (17A) qui,
.. présente une portée d'étanchéité (17D) destinée à coopérer avec le siège (17B) de ce canal (17A),
.. est de faible masse par rapport à celle de l'organe obturateur (12),
.. est mobile entre deux positions opposées dont l'une dans laquelle il présente sa portée (17D) contre le siège (17B) du canal (17A) et l'autre dans laquelle la dite portée (17D) est écartée dudit siège (1),
.. présente au moins deux surfaces (17E, 17F, 17G) opposées toutes deux soumises à l'action du fluide gazeux (3) mais, d'une part, l'une (17E, 17F) directement à la pression à laquelle le fluide (3) est introduit dans le corps (2) et, d'autre part, l'autre (17G) à la pression qu'il prend en se trouvant dans la chambre (5) dite d'alimentation,
.. présente une surface (17H) qui, tournée vers une surface (18A), dite antagoniste, solidaire d'une pièce (18) distincte de l'élément d'obturation réalise avec cette surface antagoniste un passage (6) qui, d'une part, est suffisamment étroit pour limiter le risque d'introduction de particules de matériau pulvérulent et, d'autre part, d'étendue telle que la section totale de passage convienne pour l'alimentation suffisamment rapide de la chambre (5) d'alimentation et conséquemment de la capacité (2), en fluide sous pression,
- la découpe (17A) qui constitue le canal (17A) est réalisée approximativement au centre de l'organe obturateur (12),
- la pièce (20A) de révolution que comprend le moyen (20) de guidage en translation de l'organe obturateur (12) présente, sensiblement coaxialement à la découpe (17A), une cavité (21) approximativement cylindrique de révolution qui, à l'une de ses extrémités, s'ouvre dans la chambre (5) d'alimentation et, à l'autre extrémité, présente coaxialement un conduit (22), également cylindrique de révolution, lequel conduit (22) débouche dans l'alésage (20E) dudit moyen de guidage en translation qui est relié à la source S de fluide sous pression,
- l'élément (17C) d'obturation du canal (17A) consiste en un corps épaulé et cylindrique de révolution qui comprend,
. un arbre médian (23) qui, dit piston, est engagé dans la cavité (21) de la pièce de révolution (20A) du moyen (20) de guidage en translation de l'organe (12) obturateur, et ce, de manière à présenter, d'une part, une face cylindrique (17H) en vis à vis de la surface (18A) de la cavité (21) afin de constituer un passage (6) ayant les caractéristiques du passage (6) d'alimentation de la chambre (5) d'alimentation du dispositif et, d'autre part, deux surfaces extrêmes opposées (17F, 17G) dont l'une (17F) est tournée vers l'intérieur de la cavité (21) et de ce fait directement exposée au fluide (3) à sa pression d'alimentation et, l'autre (17G) également exposée au fluide (3), mais à la pression que ce dernier prend dans la chambre (5) dite d'alimentation,
. deux arbres cylindriques extrêmes opposés (24, 25), dont, d'une part, l'un (25) qui, porté par la surface (17G) recevant l'action du fluide (3) à la pression qu'il prend dans la chambre (5) d'alimentation, présente la portée d'étanchéité (17D) destinée à coopérer avec le siège (17B) du canal (17A) et, d'autre part, l'autre (24) qui, porté par la surface (17F) tournée vers l'intérieur de la cavité (21), s'engage à coulissement dans le conduit (22) indirectement relié à la source (S) de fluide sous pression et, comprend un perçage (26) sensiblement axial et ouvert non seulement dans la face libre (17E) de cet arbre, mais également au niveau de son plan de raccordement avec la face qui le porte.

2. Dispositif selon la revendication 1 **caractérisé** en ce que la pièce (20A) de révolution que comprend le moyen (20) de guidage en translation de l'organe obturateur (12) est une pièce épaulée qui présente :
- un arbre (27) dont la surface latérale (20D) est cylindrique de révolution et constitue la portée (20D) destinée à coopérer avec la portée (20E) de guidage en translation réservée dans la paroi (1B) au moins indirectement reliée au corps (1A) du dispositif (1) et,
- une surface épaulée (28) à laquelle ledit arbre (27) se raccorde,
- une surface (29) cylindrique de révolution qui, coaxiale à l'arbre (27), coopère avec une portée (20G) qui, au moins indirectement reliée au corps (lA) du dispositif (1), comprend au moins un orifice (30) autorisant le passage du fluide contenu dans la chambre (5) d'alimentation vers la surface épaulée (28) en vue de son application à ladite surface, à la pression à laquelle il se trouve dans la chambre (5).

3. Dispositif selon la revendication 1 ou 2 **caractérisé** en ce que le conduit (22) indirectement relié à la source (S) de fluide sous pression est épaulé et, abrite un organe (17H) élastique qui, s'appuyant sur ledit épaulement et par ailleurs sur la face libre (17E) de l'arbre (24) engagé dans ce conduit (22), assure l'application élastique de l'élément (17C) par sa portée (17D) contre le siège d'étanchéité (17B) du canal (17A) ouvert dans l'organe (12) obturateur.

4. Dispositif selon l'une quelconque des revendications 1 à 3 **caractérisé** en ce que le moyen commandé (17) de libération comprend un organe (17I) d'application élastique de l'élément (17C) d'obturation par sa portée (17D) contre le siège d'étanchéité (17B).

## Patentansprüche

1. Verteilungsvorrichtung (1), welche nacheinander einerseits die Versorgung eines Behälters (2) mit einem gasförmigen Fluid (3), das im übrigen auf der Höhe einer Druckquelle (S) auf einen als Versorgungsdruck bezeichneten Druckwert verdichtet ist, und andererseits nach Unterbrechung der Versorgung mittels einer Einrichtung (M) die abrupte Entleerung dieses Behälters (2) vornehmlich zu einer das verdichtete Fluid (3) nutzenden Anlage (4) gewährleistet,
wobei das unter Druck stehende Fluid (3) zu einem Versorgungseinlaß E der Vorrichtung (1) mittels einer Leitung (3A) geleitet wird, in welche die Unterbrechungseinrichtung (M) geschaltet ist,
wobei die Vorrichtung (1) einen Korpus (1A) umfaßt, welcher folgendes aufweist:
- eine Versorgungskammer (5) mit veränderlichem Volumen, die einerseits eine Versorgungsöffnung (6) zur Versorgung mit gasförmigem Fluid (3) aufweist, das im übrigen auf den Versorgungsdruck verdichtet ist, und andererseits einen Durchlaß (7) für den Übertritt dieses gasförmigen Fluids (3) zu dem Behälter (2), und
- eine Kammer (8), ebenfalls mit veränderlichem Volumen, zur Entleerung zur Anlage (4), die mit der Vorrichtung (1) ausgerüstet ist, wobei diese Kammer (8) hierzu einerseits einen Ausschnitt (9) besitzt, der unter Begrenzung eines Durchtrittsweges für das in dem Behälter (2) aufgespeicherte Fluid (3) von einem Dichtungssitz (10) eingefaßt wird, der zum dichten Zusammenwirken mit dem Bereich (11) eines Verschlußorganes (12) mit vorgegebener Masse bestimmt ist , und andererseits zumindest an die Anlage (4) über eine als Entleerungsleitung (13) bezeichnete Leitung angeschlossen ist, die in Hohe des Dichtungssitzes (10) ihren Anfang hat,
wobei das Verschlußorgan (12) einerseits zwischen zwei gegenüber liegenden Positionen bewegbar ist, von denen die eine die Stellung ist, in der es über seinen Bereich (11) mit dem Sitz (10) der Entleerungsleitung (13) zusammenwirkt, und die andere der Position entspricht, in welcher es weitgehend vom Sitz der Leitung abgehoben ist, und andererseits folgendes aufweist:
- eine als erste bezeichnete Fläche (14), auf welche das Fluid (3) mit dem Druck einwirkt, unter dem es sich direkt in der Versorgungskammer (5) befindet,
- eine als zweite bezeichnete Fläche (15), die der ersten Fläche (14) gegenüberliegt und auf welche das Fluid (3) mit dem Druck einwirkt, unter dem es sich direkt in dem Behälter (2) befindet,
- eine als dritte bezeichnete Fläche, die ebenfalls der ersten Fläche (14) gegenüberliegt und auf welche das Fluid (3) mit dem Druck einwirkt, unter dem es sich in der Entleerungsleitung (13) befindet,
wobei dieses Verschlußorgan (12) im wesentlichen ein Rotationskörper ist und zwischen seinen beiden gegenüber liegenden Positionen mittels einer hierzu vorgesehenen Einrichtung (20) verschieblich geführt ist, welche sich in etwa auf der Längsachse des Organs (12) befindet und gegenüber dem gasförmigen Fluid (3) abgedichtet ist, wobei die Führungseinrichtung (20) ein Rotationsteil (20A) umfaßt, welches zwei gegenüber liegende Enden (20B, 20C) aufweist, von denen das eine (208) dem Verschlußorgan (12) zugeordnet ist und das andere (20C) einen zylindrischen Bereich (20D) aufweist, der mit einer Führungsbohrung (20E) für die Verschiebebewegung zusammenwirkt, die einerseits in einer zumindest indirekt mit dem Korpus (1A) der Vorrichtung (1) verbundenen Wandung (1B) ausgespart ist und anderseits zumindest indirekt mit der Quelle (S) für das unter Druck stehende Fluid (3) verbunden ist,
dadurch **gekennzeichnet**, daß:
- sie mindestens eine gesteuerte Freigabeeinrichtung (17) zur Freisetzung des zumindest in der Versorgungskammer (5) unter Druck enthaltenen Fluids (3) in die sogenannte Entleerungsleitung (13) aufweist, wodurch das Verschlußorgan (12) in Anlage gegen seinen Dichtungssitz (10) gehalten wird, wobei diese Freigabeeinrichtung (17) folgendes aufweist:
· einen Ausschnitt (17A), der in dem Verschlußorgan (12) ausgebildet ist und einerseits einen Kanal (17A) definiert, der in die erste (14) und dritte (16) Fläche des Verschlußorgans (12) mündet, und andererseits ebenfalls einen Sitz (178) zum Verschließen des Kanals (17A) über dessen gesamten Durchtrittsquerschnitt bildet,
· ein Element (17C) zum Verschließen des Kanals (17A), welches
·· einen Dichtungsbereich (17D) aufweist, der zum Zusammenwirken mit dem Sitz (17B) dieses Kanals (17A) bestimmt ist,
·· bezogen auf die Masse des Verschlußorgans (12) eine geringe Masse aufweist,
·· zwischen zwei gegenüber liegenden Positionen bewegbar ist, von denen die eine diejenige Stellung ist, in welcher es mit seinem Bereich (17D) gegen den Sitz (17B) des Kanals (17A) drückt, und die andere jene Position ist, in welcher der Bereich (17D) von dem Sitz (1) abgehoben ist,
·· mindestens zwei gegenüber liegende Flächen (17E, 17F, 17G) aufweist, auf die alle beide das gasförmige Fluid (3) einwirkt und von denen allerdings einerseits die eine (17E, 17F) direkt mit dem Druck beaufschlagt wird, unter dem das Fluid (3) in den Korpus (2) eingeleitet wird, und andererseits die andere (17G) mit dem Druck beaufschlagt wird, den das Fluid in der Versorgungskammer (5) erhält,
·· eine Fläche (17H) aufweist, die einer als Gegenfläche (18A) bezeichneten Fläche zugewandt ist, die fest mit einem vom Verschlußelement getrennten Teil (18) verbunden ist und mit dieser Gegenfläche einen Durchlaß (6) definiert, der einerseits ausreichend eng ist, um die Gefahr des Eindringens von Partikeln eines pulverförmigen Materials zu begrenzen, und andererseits so groß ist, daß der Gesamtdurchtrittsquerschnitt für eine ausreichend rasche Versorgung aus der Versorgungskammer (5) und infolgedessen des Behälters (2) mit dem unter Druck stehenden Fluid geeignet ist,
- daß der den Kanal (17A) bildende Ausschnitt in etwa in der Mitte des Verschlußorgans (12) ausgebildet ist,
- daß das Rotationsteil (20A), das zur Führungs- und Verschiebeeinrichtung (20) für das Verschlußorgan (12) gehört, im wesentlichen koaxial zum Ausschnitt (17A) einen in etwa rotationszylindrischen Hohlraum (21) aufweist, der an einem seiner Enden in die Versorgungskammer (5) mündet und am anderen Ende eine koaxial verlaufende Leitung (22) aufweist, die ebenfalls rotationszylindrisch ist und in die Bohrung (20E) der Führungs- und Verschiebeeinheit mündet, die mit der Quelle S für das unter Druck stehende Fluid verbunden ist,
- daß das Verschlußelement (17C) des Kanals (17A) aus einem rotationszylindrischen Körper mit Absatz besteht, der folgendes umfaßt:
· eine als Kolben bezeichnete Mittelachse (23), die in den Hohlraum (21) des Rotationsteils (20A) der Führungs- und Verschiebeeinrichtung (20) für das Verschlußorgan (12) in einer Weise eingreift, daß einerseits zur Bildung eines Durchtritts (6) mit den Merkmalen der Versorgungsleitung (6) der Versorgungskammer (5) der Vorrichtung eine zylindrische Fläche (17H) der Fläche (18A) des Hohlraums (21) gegenüber steht, und andererseits zwei gegenüber liegende Endflächen (17F, 17G) vorhanden sind, von denen die eine (17F) dem Innenraum des Hohlraums (21) zugekehrt und damit direkt mit dem Fluid (3) unter dem Versorgungsdruck beaufschlagt ist, und die andere (17G) ebenfalls mit dem Fluid (3) beaufschlagt ist, allerdings unter dem Druck, den dieses in der sogenannten Versorgungskammer (5) erhält,
· zwei gegenüber liegende äußere zylindrische Wellen (24, 25), von denen einerseits die eine (25), die sich auf der Fläche (17G) abstützt, die der Wirkung des Fluids (3) unter dem Druck ausgesetzt ist, den dieses in der Versorgungskammer (5) erhält, den zum Zusammenwirken mit dem Sitz (17B) des Kanals (17A) bestimmten Dichtungsbereich (17D) aufweist, und von denen andererseits die andere (24), die sich auf der dem Innenraum des Hohlraums (21) zugekehrten Fläche (17F) abstützt, gleitend in die indirekt mit der Quelle (S) des unter Druck stehenden Fluids verbundene Leitung (22) eingreift und eine im wesentlichen axiale Durchbohrung (26) aufweist, die nicht nur in der freien Fläche (17E) dieser Welle sondern auch in Höhe ihrer Anschlußebene zum Anschluß an die Fläche offen ist, auf der sie sich abstützt.

2. Vorrichtung nach Anspruch 1, dadurch **gekennzeichnet,** daß das Rotationsteil (20A), welches zu der Führungs- und Verschiebeeinrichtung (20) für das Verschlußorgan (12) gehört, ein Teil mit Absatz ist, welches folgendes aufweist:
- eine Welle (27), deren Seitenfläche (20D) rotationszylindrisch ist und den Bereich bildet, der zum Zusammenwirken mit dem Führungs- und Verschiebebereich (20E) bestimmt ist, der in der Wandung (1B) ausgespart ist, die zumindest indirekt mit dem Korpus (1A) der Vorrichtung (1) verbunden ist, und
- eine Fläche (28) mit Absatz, an welche sich die Welle (27) anschließt,
- eine rotationszylindnsche Fläche (29), welche koaxial zur Welle (27) verläuft und mit einem Bereich (20G) zusammenwirkt, der zumindest indirekt mit dem Korpus (1A) der Vorrichtung (1) verbunden ist, und welche mindestens eine Offnung (30) aufweist, die den Durchtritt des in der Versorgungskammer (5) enthaltenen Fluids zu der Fläche (28) mit Absatz gestattet, auf welche es mit dem Druck einwirkt, unter dem es in der Kammer (5) steht.

3. Vorrichtung nach Anspruch 1 oder 2, dadurch **gekennzeichnet**, daß die indirekt mit der Quelle (S) des druckbeaufschlagten Fluids verbundene Leitung einen Absatz aufweist und ein elastisches Organ (17H) abdeckt, welches sich unter Abstützung auf dem Absatz und im übrigen auf der freien Fläche (17E) der in diese Leitung (22) eingreifenden Welle die elastische Anlage des Elements (17C) über seinen Bereich (17D) gegen den Dichtungssitz (17B) des offenen Kanals (17A) in dem Verschlußorgan (12) gewährleistet.

4. Vorrichtung nach einem der Ansprüche 1 bis 3, dadurch **gekennzeichnet**, daß die gesteuerte Freigabeeinrichtung (17) ein Organ (171) zur elastischen Anlage des Verschlußelements (17C) über seinen Bereich (17D) gegen den Dichtungssitz (17B) aufweist.

## Claims

1. A dispensing device (1) sequentially ensuring, firstly, that a space (2) is supplied with a gaseous fluid (3), furthermore compressed at the level of a source (S) to a supply pressure, and, secondly, subsequent to the interruption of the supply by a means (M), that the space (2) is rapidly evacuated, in particular in the direction of an installation (4) utilising the compressed fluid (3),
the said pressurised fluid (3) being conveyed to a supply inlet (E) of the device (1) via a conduit (3A), in which the interruption means (M) is interposed,
the device (1) comprising a body (1A) having:
- a variable volume supply chamber (5) provided, firstly, with an opening (6) for the supply of the gaseous fluid (3), furthermore compressed to the said supply pressure, and, secondly, with a passage (7) for conveying this gaseous fluid (3) towards the space (2), and
- a chamber (8), likewise of variable volume, for evacuation towards the installation (4) fed by the device (1), the chamber (8) being, for this purpose, on the one hand provided with a slot (9) which, delimiting a passageway for the fluid (3) accumulated in the space (2). is bordered by a sealing seat (10) for co-operating in a sealed manner with the bearing surface (11) of a sealing member (12) of determinate mass, and on the other hand connected at least to the installation (4) by an evacuation conduit (13) beginning at the said seat (10),
the sealing member (12) firstly being movable between two opposing positions, in one of which it cooperates with the seat (10) of the evacuation conduit (13) by means of its bearing surface (11), and in the other being widely spaced apart from the seat of the said conduit, and secondly comprising:
- a first surface (14) exposed to the action of the fluid (3) at the pressure thereof directly in the supply chamber (5),
- a second surface (15) opposite the first surface (14) and exposed to the action of the fluid (3) at the pressure thereof directly in the space (2),
- a third surface (16) also opposite the first surface (14) and exposed to the action of the fluid (3) at the pressure thereof in the evacuation conduit (13),
this sealing member (12) substantially being rotatable and translationally guided between its two opposing positions by a means (20) for this purpose which, being located substantially on the longitudinal axis of the said member (12), is impermeable to the gaseous fluid (3), the said guiding means (20) comprising a rotational part (20A) having two opposing ends (20B, 20C), one (20B) of which is connected to the sealing member (12) and the other (20C) of which has a cylindrical bearing surface (20D) co-operating with a bore (20E) for translational guiding, for its part on the one hand provided in a wall (1B) at least indirectly connected to the body (1A) of the device (1), and on the other hand at least indirectly connected to the source (S) of pressurised fluid (3),
this device being characterised in that:
- it comprises at least one controlled means (17) for releasing into the evacuation conduit (13) pressurised fluid (3) contained at least in the supply chamber (5) to keep the sealing member (12) resting against its sealing seat (10), the releasing means (17) comprising:
• a slot (17A) which, being provided in the sealing member (12), on the one hand forms a channel (1 7A) opening into the first (14) and third (16) surfaces of the said sealing member (12), and on the other hand also forms a seat (17B) for the purpose of sealing the channel (17A) over its entire cross-sectional area,
• an element (17C) for sealing the channel (17A) which:
•• has a sealing bearing surface (17D) for co-operating with the seat (17B) of this channel (17A),
•• is of low mass relative to the mass of the sealing member (12),
•• is movable between two opposing positions, in one of which the bearing surface (17D) of the channel (17A) rests against the seat (17B) of the channel (17A), and in the other the said bearing surface (17D) being spaced apart from the said seat (1),
•• has at least two opposing surfaces (17E, 17F, 17G), both of which are subjected to the action of the gaseous fluid (3), but one (17E, 17F) directly at the pressure at which the fluid (3) is introduced into the body (2), and the other (17G) at the pressure that the fluid adopts on entering the supply chamber (5),
•• has a surface (17H) which, facing an opposing surface (18A) integral with a part (18) distinct from the sealing element, forms, together with this opposing surface, a passage (6) which is sufficiently narrow to limit the risk of introduction of particles of powdered material, and is of an extent such that the total cross-sectional area is suitable for supplying pressurised fluid sufficiently rapidly to the supply chamber (5) and consequently to the space (2),
- the slot (17A) forming the channel (17A) is arranged substantially in the centre of the sealing member (12),
- the rotational part (20A), comprised in the translational guiding means (20) of the sealing member (12), has, substantially co-axially with the slot (17A), a substantially rotationally cylindrical cavity (21), at one end opening into the supply chamber (5) and at the other end being coaxially provided with a likewise rotationally cylindrical conduit (22) opening into the bore (20E) of the said translational guiding means connected to the source (S) of pressurised fluid,
- the sealing element (17C) of the channel (17A) consists of a shouldered, rotationally cylindrical body comprising:
• a central shaft (23), being a piston, engaging in the cavity (21) of the rotational part (20A) of the translational guiding means (20) of the sealing member (12) so as to have, firstly, a cylindrical surface (17H) opposite the surface (18A) of the cavity (21) in order to form a passage (6) having the features of the supply passage (6) of the supply chamber (5) of the device, and, secondly, two opposing end surfaces (17F, 17G), one (17F) of which faces the interior of the cavity (21) and, consequently, is directly exposed to the fluid (3) at its supply pressure, and the other (17G) also being exposed to the fluid (3), but at the pressure that the latter adopts in the supply chamber (5),
• two opposing cylindrical end shafts (24, 25), one (25) of which, being carried by the surface (17G) subjected to the action of the fluid (3) at the pressure that it adopts in the supply chamber (5), is provided with the sealing bearing surface (1 7D) for co-operating with the seat (17B) of the channel (17A), and the other (24) of which, being carried by the surface (17F) facing the interior of the cavity (21), slidingly engages in the conduit (22) indirectly connected to the source (S) of pressurised fluid and has a substantially axial bore (26) opening not only into the free surface (17E) of this shaft, but also at the level of its plane of transition to the surface carrying it.

2. A device according to claim 1, characterised in that the rotational part (20A), comprised in the translational guiding means (20) of the sealing member (12), is a shouldered part having:
- a shaft (27), the lateral surface (20D) of which is rotationally cylindrical and forms the bearing surface (20D) for co-operating with the bearing surface (20E) for translational guiding provided in the wall (1B) at least indirectly connected to the body (1A) of the device (1), and
- a shouldered surface (28) to which the said shaft (27) is connected,
- a rotationally cylindrical surface (29) which, being co-axial with the shaft (27), co-operates with a bearing surface (20G) which, being at least indirectly connected to the body (1 A) of the device (1), comprises at least one opening (30) permitting the passage of the fluid contained in the supply chamber (5) towards the shouldered surface (28) for the purpose of applying it to the said surface at the pressure thereof in the chamber (5).

3. A device according to claim 1 or 2, characterised in that the conduit (22) indirectly connected to the source (S) of pressurised fluid is shouldered and protects a resilient member (17H) which, resting against the said shoulder and, furthermore, against the free surface (17E) of the shaft (24) engaging in this conduit (22), ensures the resilient application of the element (17C), by means of its bearing surface (17D), to the sealing seat (17B) of the channel (17A) opening into the sealing member (12).

4. A device according to any one of claims 1 to 3, characterised in that the controlled releasing means (17) comprises a member (17l) for resilient application of the sealing element (17C), by means of its bearing surface (17D), to the sealing seat (17B).
